# EUROPEAN PATENT APPLICATION

(11) **EP 4 521 144 A1**
(43) Date of publication of application: **12.03.2025**
(21) Application number: 24199051.4
(22) Date of filing: 06.09.2024
(51) Int. Cl.: G01V 9/00, G01V 20/00, G06N 3/08

(54) **BIOSTRATIGRAPHY INTERPRETATION SYSTEM AND METHOD**

(30) Priority: 07.09.2023 US 202363581103 P
(71) Applicant: CGG Services SAS, 91300 Massy (FR)
(72) Inventor: Kiss, Peter, 91300 MASSY (FR); Cullum, Joshua, 91300 MASSY (FR); Clayton, Jennifer, 91300 MASSY (FR); Lee, Wenjun, 91300 MASSY (FR)
(74) Representative: Ipsilon

(57) **Abstract**

A device (600) for generating a chronostratigraphic chart (520') for a given subsurface includes receiving (602) biostratigraphic data (210) including taxon names (211), standardizing (604) the taxon names (211) in the biostratigraphic data (210) to obtain standardized taxon names, generating (606) species biostratigraphic events (328) from the standardized taxon names by estimating an abundance of each species in the biostratigraphic data (210) with respect to a sample depth, assigning (608) ages (332) to the species biostratigraphic events (328), and generating (608) the chronostratigraphic chart (520') based on the species biostratigraphic events (328) and the assigned ages (332).

## Description

### BACKGROUND OF THE INVENTION

### TECHNICAL FIELD

Embodiments of the subject matter disclosed herein generally relate to a system and method for processing biostratigraphy data, and more particularly, to a system that takes as input legacy biostratigraphy data, expressed in various formats and having inconsistent definitions, processes this data and generates one or more chronostratigraphic charts indicative of time periods of various layers in a well or multiple wells from which the data was acquired.

### DISCUSSION OF THE BACKGROUND

Biostratigraphy is a sub-field within the discipline of stratigraphy, which uses microfossils to date geological sediments. Biostratigraphy focuses on the use of fossil organisms to date and correlate layers of sedimentary rock. A method used by the biostratigraphy is based on the principle that certain fossils, known as index fossils, are found in specific strata and can be used to identify and correlate the ages of rock layers across different geographic locations. By studying the distribution and succession of fossils within these layers, geologists can establish a relative timeline (chart or image) for the Earth's history and better understand the chronological sequence of geological events.

Biostratigraphy has been widely applied within the oil and gas industry to verify drill positions [1], model geological basin depositional environments [2], and determine the age of sedimentary layers [3]. The traditional biostratigraphic interpretation workflow requires strong micropaleontological expertise and a considerable amount of time. Additionally, it has been shown that specialists are strongly influenced by their personal preferences while interpreting novel or reinterpreting legacy (historic) biostratigraphic data. Therefore, the application of digital tools for handling the re-interpretation of legacy biostratigraphic data in modern geosciences significantly decreases the time spent on interpretation and minimizes expert bias.

There have been advancements in the biostratigraphic workflow, especially in recent decades, with the application of novel computer science techniques within geosciences aiding specialists in their interpretations [4-6]. The most notable techniques aimed at digitizing the traditional biostratigraphic workflow focus on implementing methods for: collecting biostratigraphic data (e.g., first occurrence, last occurrence, and common occurrences of fossil species) such as the RASC method [4]; utilizing convolutional neural networks to digitize the taxonomic determination of microfossils [5]; and applying machine learning algorithms to interpret paleoenvironmental conditions and determine biozones/ages using biostratigraphic data [7]. The purpose of these approaches is to generate more biostratigraphic data and make interpretation quicker.

However, the data generated by these algorithms is often inconsistently curated and stored in untemplated reports, rendering biostratigraphic datasets inaccessible and outdated. Biostratigraphic data can become outdated for several reasons, such as changes in the i) geological time scales, ii) microfossils genus and taxon names, and their synonyms, and iii) species biostratigraphic events.

These changes can collectively or individually impact biostratigraphic interpretations at single or multiple well locations. Because of the relationship between the geological time scale and biostratigraphic data, a change in the data can directly affect biozone/age interpretation. The role of species names and their synonyms is more complex, as species names can vary across different locations and industry standards. To determine species biostratigraphic events in various assemblages, it is necessary to document changes in species names and their synonyms. Species names and synonyms are often inconsistently stored in biostratigraphic reports or databases with various structures, making it difficult to update changes in species biozone/age interpretation and to access legacy data. Since updating and reinterpreting biostratigraphic legacy data requires deep expertise and is a time-consuming manual task, biostratigraphic data tend to be underutilized in current and planned petroleum geoscience investigations.

Legacy biostratigraphic data are common in the oil and gas industry. Despite their well-suited data structure for advanced analytics and digitalization, there have not been any overarching digital workflows developed to update legacy biostratigraphic data, starting from data extraction, translation, and loading. An attempt at workflow transformation was made by the authors in [7], who introduced machine learning algorithms into the biozone/age and paleoenvironmental interpretation phase. This attempt used legacy foraminifera and nannofossil data from three locations. Despite accurate paleoenvironmental reconstruction, the achieved biozone/age inferences had a low success rate (60%). Such inaccuracy could cause discrepancies of hundreds of meters in the depth of stratigraphic boundaries.

Thus, there is a need for a new system and method that is capable of more accurately determining the age of the various layers in subsurface locations based on existing biostratigraphic data.

### SUMMARY OF THE INVENTION

According to an embodiment, there is a method for generating a chronostratigraphic chart for a given subsurface. The method includes receiving biostratigraphic data including taxon names, standardizing the taxon names in the biostratigraphic data to obtain standardized taxon names, generating species biostratigraphic events from the standardized taxon names by estimating an abundance of each species in the biostratigraphic data with respect to a sample depth, assigning ages to the species biostratigraphic events, and generating the chronostratigraphic chart based on the species biostratigraphic events and the assigned ages.

According to another embodiment, there is a computing system for generating a chronostratigraphic chart for a given subsurface, and the computing system includes an interface for receiving biostratigraphic data including taxon names, and a processor connected to the interface. The processor is configured to standardize the taxon names in the biostratigraphic data to obtain standardized taxon names, generate species biostratigraphic events from the standardized taxon names by estimating an abundance of each species in the biostratigraphic data with respect to a sample depth, assign ages to the species biostratigraphic events, and generate the chronostratigraphic chart based on the species biostratigraphic events and the assigned ages.

According to yet another embodiment, there is a non-transitory computer readable medium including computer executable instructions, wherein the instructions, when executed by a processor, implement the methods discussed herein.

### BRIEF DESCRIPTION OF THE DRAWINGS

For a more complete understanding of the present invention, reference is now made to the following descriptions taken in conjunction with the accompanying drawings, in which:
FIG. 1 is a flowchart of a method for generating chronostratigraphic charts from biostratigraphic data;
FIG. 2A illustrates an example of a microfossil distribution chart from which the biostratigraphic data is extracted and FIG. 2B shows a generated data frame;
FIG. 3A displays the extracted taxon abundance data from the microfossil distribution chart, including sample depth, taxon names, and taxon counts;
FIG. 3B shows the output of the executed species biostratigraphic events determination by applying one or more generation functions;
FIG. 4 illustrates one of the one or more generation functions of FIG. 3B;
FIG. 5A shows the tabulated output of the original (default) and enriched (pre-review) results of the workflow of FIG. 1;
FIG. 5B displays two distinct interpretation versions of the tabulated data from FIG. 5A, in the form of chronostratigraphic charts;
FIG. 6 is a flowchart of a method for calculating the chronostratigraphic charts; and
FIG. 7 is a schematic diagram of a computing system that implements the methods discussed herein.

### DETAILED DESCRIPTION OF THE INVENTION

The following description of the embodiments refers to the accompanying drawings. The same reference numbers in different drawings identify the same or similar elements. The following detailed description does not limit the invention. Instead, the scope of the invention is defined by the appended claims. The following embodiments are discussed, for simplicity, with regard to legacy biostratigraphic data. However, the embodiments to be discussed next are not limited to legacy biostratigraphic data, but may be applied to current data.

Reference throughout the specification to "one embodiment" or "an embodiment" means that a particular feature, structure or characteristic described in connection with an embodiment is included in at least one embodiment of the subject matter disclosed. Thus, the appearance of the phrases "in one embodiment" or "in an embodiment" in various places throughout the specification is not necessarily referring to the same embodiment. Further, the particular features, structures or characteristics may be combined in any suitable manner in one or more embodiments.

According to an embodiment, a method for generating chronostratigraphic charts uses one or more event generation functions (simply called "function" in this disclosure) to analyze the abundance of each species in an assemblage and aims to reduce interpretation inaccuracies by determining the final age interpretation based on species biostratigraphic events calculated based on the abundance of each species. These events include the first and last occurrences of taxa, increases and decreases in abundance, maximum abundance, and the first and last common occurrences. The event generation functions assign events in a manner similar to how an expert would determine them. However, instead of manually generating the events, the method digitally assigns events within seconds. This approach differentiates the workflow of this method, referred to as "Biostratigraphy Interpretation Tool of Legacy data," i.e., "BITOLD" in the following, from the existing workflows that use classification models (Random Forest and Naïve Bayesian), which create clusters based on the distance between neighbouring data points in the assemblages [7]. The one or more generation functions digitalize the interpretation phase of the biostratigraphic workflow similarly to how biostratigraphic experts determine key biostratigraphic events of each species in the assemblage, thereby increasing interpretation accuracy (e.g., by more than 90%). In one implementation, the generation function may be supplemented with: advanced data engineering tools that extract data (sample depth, species names, and taxon counts) from legacy microfossil distribution charts; machine learning algorithms designed to detect cavings and reworked specimens in the microfossil assemblages; extended microfossil and events dictionaries, involving foraminifera, nannofossils, and palynomorphs, thus making the BITOLD workflow unique in the field of biostratigraphic legacy data re-interpretation.

The embodiments discussed next provide a description of the digital interpretation of legacy biostratigraphic data. In practice, microfossil taxon abundance data are extracted from legacy microfossil distribution charts, or software specific .dex files and arranged in a structured data frame suitable for analysis. The term "taxon" is understood in this disclosure to refer to a group or category of organisms that are classified together. Taxa (the plural of taxon) can range from broad groups, like kingdoms or phyla, to very specific ones, like species or subspecies. The obtained microfossil taxon names and synonyms are corrected and matched with (in-house) dictionaries. A dictionary is in this embodiment a collection of data gathered by experts over time that correlate species with time periods in which they existed. Cavings and reworked specimens of each species are labelled using machine learning algorithms throughout the entire well section. The generation functions are executed on the species count data frame to determine the species biostratigraphic events. These biostratigraphic events are correlated with the (in-house) dictionaries to assign absolute ages to each determined event. Two interpretation versions (two maps or two charts) are created and plotted in the form of a chronostratigraphic chart (map).

The implementation of the BITOLD workflow may offer one or more advantages. First, the described approach can locate and extract sample depth, species names, and taxon counts from various sources, including microfossil distribution charts and software-specific files, thus saving time for experts. Second, it provides the ability to update species names, species events, biozones, and ages according to the most recent industry and taxonomic standards. Third, the workflow interprets the biostratigraphic events and quickly provides chronostratigraphic interpretations based on the assemblages in which cavings and reworked specimens are labelled. Fourth, multiple interpretation versions can be delivered and stored simultaneously, enabling comparison between default (original) and pre-review (updated and enriched) interpretations. These features are unbiased by expert preferences and scalable from single to multiple wells.

Prior to discussing the BITOLD workflow in more detail, a few definitions are introduced. A "fossil group" refers to distinctive fossil groups or assemblages, involving fossilised pollens (palynomorph), nannofossils, and foraminifera, used to identify sedimentary rock layers. In geology and paleontology, an "assemblage" refers to a group or collection of different types of fossils or mineral species found together in a particular layer or stratum of rock, for example, within a well. The concept of an assemblage represents the organisms or materials that coexisted in a specific environment at a given time in Earth's history.

Nannofossils, or calcareous nannofossils, are microscopic fossils primarily composed of calcium carbonate. These tiny fossils are the remains of marine plankton, particularly coccolithophores, a type of algae that lives in the recent global ocean and lived in the ocean millions of years ago. Nannofossils are generally less than 20 micrometers in size, making them some of the smallest fossils studied in micropaleontology.

Foraminifera is a group of unicellular zooplankton with shells, or tests, that are typically composed of calcium carbonate. These microorganisms are found in both marine and freshwater environments, and they have existed for over 500 million years, making them important in the study of Earth's history. Foraminifera are valuable in biostratigraphy and paleoclimatology for several reasons: (1) they exhibit a wide range of shapes and sizes, and their shells are often well-preserved in sedimentary rocks. Because of their abundance and diversity, they provide detailed records of past environments; (2) foraminifera evolved rapidly, producing many different species over relatively short geological time spans. This rapid evolution makes them excellent index fossils, which can be used to date and correlate sedimentary layers across different regions; (3) the composition of foraminifera's shells can reflect the chemistry of the water in which they lived, providing insights into past ocean temperatures, salinity, and other environmental conditions. This makes them desired in reconstructing past climates and understanding climate change over geological time; (4) foraminifera help identify the age of rock formations and potential hydrocarbon reservoirs, as their presence can indicate specific types of depositional environments.

Another term used by the BITOLD workflow is the "species synonyms." This term refers to the synonym taxa names, where taxa are the groups or categories into which organisms are classified in the scientific system of taxonomy. Taxa can represent any level of classification, from broad categories like kingdoms and phyla to more specific levels such as genus and species.

Yet another term used by the BITOLD workflow is the "reworked specimens." They are fossil taxa identified in sedimentary rock layers that have been transported since its original deposition, i.e., as the definition indicates, these specific specimens have moved to a different location from their original location, for any kind of reason. Thus, such specimens can be deceiving when trying to identify the age of a given layer in the subsurface.

Another term used by the BITOLD workflow is "cavings," also known as an outlier. Caved fossil taxa refer to specimens that have been transported from the walls of a borehole during drilling, due to a process associated with the drilling. These fossils are then mixed with samples from deeper, older layers, even though they originate from younger, shallower sediments. They can appear as outliers in the stratigraphic record, potentially causing inaccurate age interpretations.

The BITOLD workflow may use legacy biostratigraphic data, newly acquired biostratigraphic data, or a mixture of the two. The "legacy biostratigraphic data" refers to already collected biostratigraphic data, for various reasons, for example, oil and gas exploration, but also for other reasons. This data comes from various sources, was acquired with different methods, and was stored in different file formats. For example, the legacy biostratigraphic data may originate from: microfossil distribution charts, and software-specific abundance data. The microfossil distribution charts display sample depth, taxon names, and taxon counts and are usually stored in .pdf file format. The software-specific abundance data includes sample depth, taxon names, and taxon counts stored in .dex files exported from the software StrataBugs.

The BITOLD workflow is configured to determine the following biostratigraphic species events: TOP, BASE, INC, DEC, ACME, FCO, and LCO, and these events are defined as follows:
TOP = the `TOP occurrence' species event marks the highest (=shallowest) stratigraphic level at which a specific taxon is found in a well;
BASE = the 'BASE occurrence' species event marks the lowest (=deepest) stratigraphic level at which a specific taxon is found in a well;
INC = the `Increase in abundance' species event marks a statistically significant increase in abundance of a particular taxon in a well;
DEC = the 'Decrease in abundance' species event signifies a statistically significant decline in abundance of a particular taxon in a well;
ACME = the `Maximum abundance' species event represents the maximum abundance of a taxon at a stratigraphic level in a well;
FCO = the 'First common occurrence' species event is the first stratigraphic level, where a taxon becomes common enough to be consistently present in the well; and
LCO = the 'Last common occurrence' species event is the last observed stratigraphic level, where a taxon becomes common enough to be consistently present in the well

The term "statistically significant" used for the events INC and DEC refers to the likelihood that a stratigraphic event in a well sample is not due to random chance but instead reflects a real effect or relationship. When a result is statistically relevant, it means that the probability of the result occurring by random chance is low, typically below a predefined threshold. This threshold is often represented by a p-value, with a common cutoff being p < 0.05. If the p-value is less than 0.05, the result is considered statistically significant, meaning there's less than a 5% chance that the observed result is due to random variation alone.

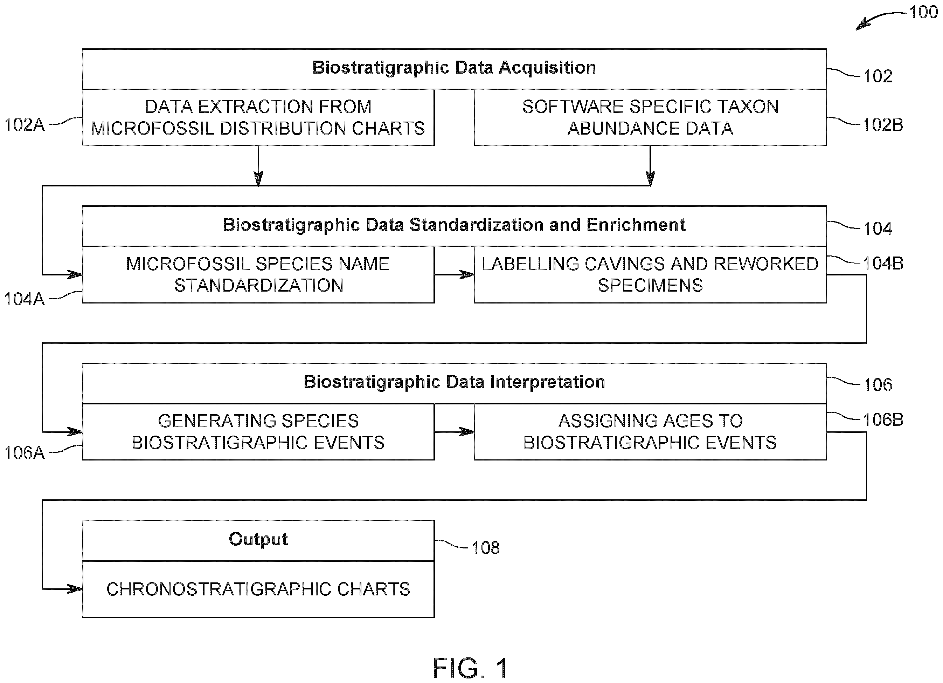

Next, how to determine the biostratigraphic species events TOP, BASE, INC, DEC, ACME, FCO, and LCO, and how to use them to generate a chronostratigraphic chart of the subsurface is discussed with regard to the figures. FIG. 1 illustrates a flowchart 100 for the BITOLD workflow. The method starts in step 102 with acquiring the biostratigraphic data. Depending on the various data formats discussed above, which usually include microfossil distribution charts and StrataBugs software specific .dex exports, distinct approaches 102A and/or 102B to data extraction are applied. The aim of each approach is to produce a structured data frame that includes sample depth, taxon names, and taxon counts, translated into a structure (e.g., a table) suitable for advanced analytics. Note that a data frame in the computing environment (e.g., Python Pandas) is defined as a two-dimensional tabular data structure with labelled axes (rows and columns). The two approaches 102A and 120B for obtaining sample depth, taxon names, and taxon counts, based on the file formats, are as now discussed.

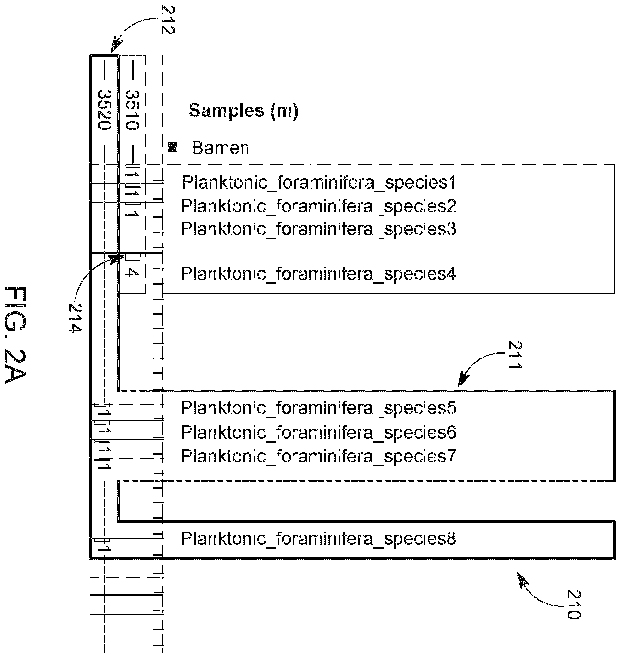

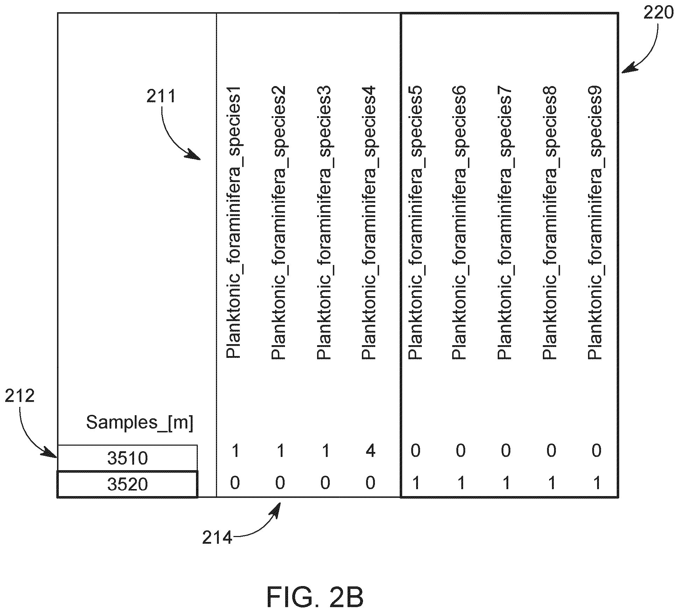

For the data extraction approach 102A from microfossil distribution charts, the taxon names, taxon counts, and their corresponding sample depths are extracted directly from the microfossil distribution charts (see, for example, chart 210 in FIG. 2A, also called biostratigraphic data) using data engineering techniques. Note that the biostratigraphic data 210 includes samples taken from a well during drilling, and these samples include fossils within the rock layers. The age of the fossils when correlated with specific time intervals in Earth's history, is related to the relative ages of the rocks. Thus, by analyzing the fossil content of these samples, it is possible to assign an age to the rock layers in the well, i.e., to generate a chronostratigraphic chart. The method allows for the selection of bounding boxes, starting with the selection of depth columns and setting the depth scale. After defining the depth and setting the depth scale, the corresponding taxon count values are extracted at each sample depth along with the corresponding taxon names. The output format is a data frame 220 with taxon names 211 and sample depths 212 as index columns and taxon counts 214 as values, as illustrated in FIG. 2B. Note that the chart 210 in FIG. 2A shows various depths 212 (only two are illustrated for simplicity) and the number 214 of fossils for a species, for each species. The data frame 220 includes the same information but structured as a table that can be mathematically manipulated.

For the software specific taxon abundance data approach 102B, the taxon counts are often recorded in software used for stratigraphic interpretations. One of the most widely used industry-standard software for creating microfossil distribution charts is StrataBugs. This software enables the export of taxon abundance data in a .dex file format, which represents a structured data frame suitable for advanced analytics.

Returning to the flow chart of FIG. 1, after acquiring the data 210 in step 102 and structuring it into a frame 220, the method advances to step 104 of biostratigraphic data standardization and enrichment. The data standardization step involves the update of taxon names, which is followed by labelling cavings and reworked specimens in the assemblage. Species events are generated after the taxon names are corrected and cavings and reworked specimens are labelled.

Step 104 includes a sub-step 104A of microfossil species name standardization and a sub-step 104B of labelling cavings and reworked specimens. The sub-step 104A standardizes the names of the microfossil species so that various data sources are treated in a similar way. More specifically, the species names obtained from microfossil distribution charts or .dex files are frequently outdated due to changes in species taxonomy. This means that a dex file generated ten years ago may refer to a given species with a first name, while another dex file recently generated may refer to the same given species with a second name, which is different from the first name. Alternatively, some species in certain geographic regions are known by distinct synonyms.

To standardize the species names, the genus and taxon names are tokenized and compared to an expert-curated species list. In one embodiment, fuzzy string matching (a known mathematical approach for comparing strings of data) is used to find close matches where there is not an exact match between the various names of a same species. Other mathematical methods may be used for standardizing the names of the species. The fuzzy string matching may use the Damerau-Levenshtein distance as a threshold for matching two strings (two names of species) and the Jaro-Winkler distance to order the matched strings. These two procedures are known in the art and thus, their description is omitted herein. Other distance measures may be used. The Jaro-Winkler Distance has a value between 0, for exact matches, and 1, for completely dissimilar terms. When the Jaro-Winkler degree of similarity score is above 0.15, the species name match is validated by the expert. The standardization of microfossil species names results in standardized species names, which are used for assigning ages to the generated species events, as ages can only be assigned to matched species events. The standardization step 104 brings all the data sets used by the method to have a "common denominator," i.e., the species have the same name and not similar or distinct names.

The sub-step 104B labels cavings and reworked specimens, both of which contribute to inaccuracies in establishing the ages of the samples. The data frame with the updated species names from sub-step 104A is used for labelling caved and reworked specimens in the assemblage. This step of the workflow utilizes, for example, the XGBoost supervised machine learning algorithm to identify distribution patterns for each species in the assemblage. Other known algorithms may be used to achieve the same results. The algorithm is trained to predict labels based on these patterns when applied to features in a new dataset. Specimens identified as caved or reworked in the new data frame are labelled as 'Cavings' or `Reworked specimen' and are retained for further interpretation, but are not used for generating the chronostratigraphic charts/maps of the method 100.

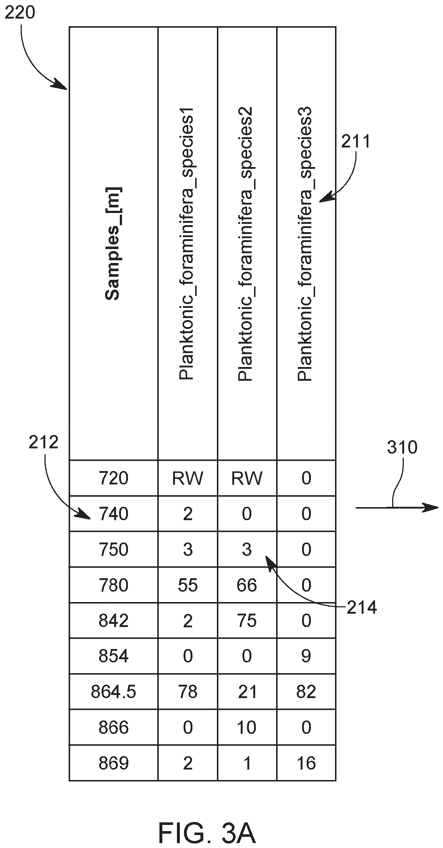

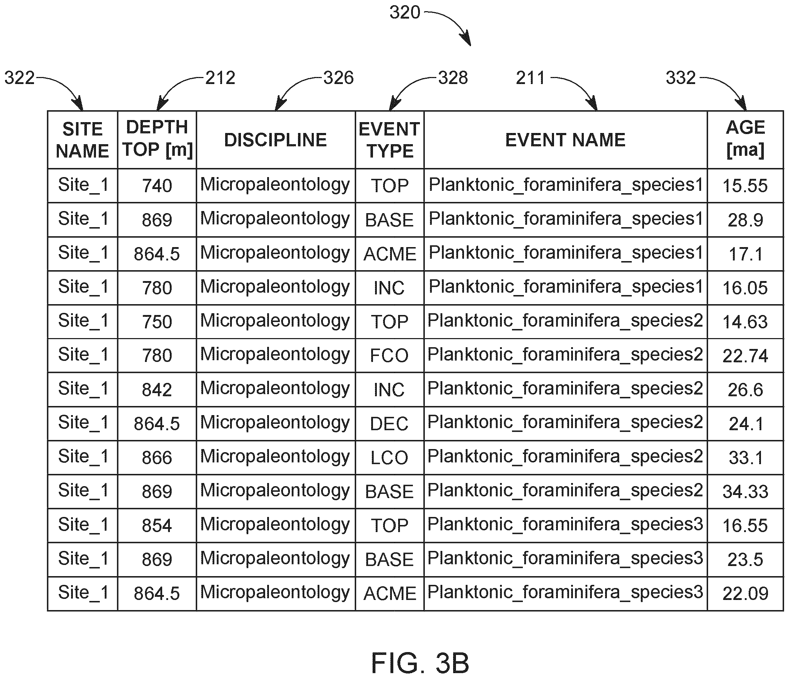

Next, the method performs the biostratigraphic data interpretation step 106. This phase of the workflow focuses on a sub-step 106A of determining the biostratigraphic species events TOP, BASE, LCO, FCO, INC, DEC, and ACME and a sub-step 106B of assigning age values to each determined biostratigraphic event. FIG. 3A illustrates the standardized biostratigraphic data 220 (different values are presented in the figure, but the data frame has the same structure as in FIG. 2B) prior to being processed by one or more generation functions 310. The standardized biostratigraphic data 220 includes the abundance of taxon, i.e., the number 214 of fossils, for each species at certain depths 212 of the well. In one embodiment, one generation function per biostratigraphic species event, i.e., TOP, BASE, LCO, FCO, INC, DEC, and ACME, is introduced for generating the events. An example of the generated species biostratigraphic events file 320 with assigned ages is shown in FIG. 3B. Note that the species biostratigraphic events file 320 includes a site name 322, which indicates a geographical location of where the data was collected from, a depth 212 from the top of the sample, which indicates a depth of the location where the event occurred, from the surface of the earth, a name 324 of the discipline used for determining the event, an event type 328 which indicates the biostratigraphic species event, an event name 211, which is associated with the type of specimen that was used to determine the species, and an age 332 of the event.

Biostratigraphic events for species are determined only for in-situ specimens that were not identified as 'cavings' or 'reworked specimens' in step 104B by the pre-trained XGBoost supervised machine learning algorithm. 'Cavings' and 'reworked specimens' are excluded in this embodiment from species biostratigraphic event determination because these specimens have been post-depositionally transported within the well section. Their repositioned depths, whether shallower or deeper, typically leads to incorrect age interpretation assignments.

The species biostratigraphic events 328 are generated in step 106A with one or more generation functions 310 that examine the abundance of each species 211 in an assemblage described by stratigraphic data 220 with respect to the sample depth 212. In one embodiment, the events 328 for each species in the assemblage are calculated based on the following definitions:
TOP = The `TOP occurrence' species event marks the highest (i.e., shallowest) stratigraphic level at which a specific taxon is found in a well.
BASE = The 'BASE occurrence' species event marks the lowest (i.e., deepest) stratigraphic level at which a specific taxon is found in a well.
INC = The `Increase in abundance' species event is identified at the sample depth where the species abundance falls into the upper quartile after calculating the confidence levels of their normal distribution.
DEC = The 'Decrease in abundance' species event is identified at the sample depth where the species abundance falls into the lower quartile after calculating the confidence levels of their normal distribution.
ACME = The `Maximum abundance' species event represents the highest abundance of a taxon at a stratigraphic level in a well.
FCO = The 'First common occurrence' species event is the first stratigraphic level where a taxon becomes common enough to be consistently present in the well. In one embodiment, the FCO is determined at the sample depth where the species abundance first exceeds six specimens for foraminifera and palynomorphs, and twenty-five specimens for nannofossils.
LCO = The 'Last common occurrence' species event is the last observed stratigraphic level where a taxon is common enough to be consistently present in the well. In one embodiment, the LCO is determined at the sample depth where the species abundance last exceeds six specimens for foraminifera and palynomorphs, and twenty-five specimens for nannofossils.

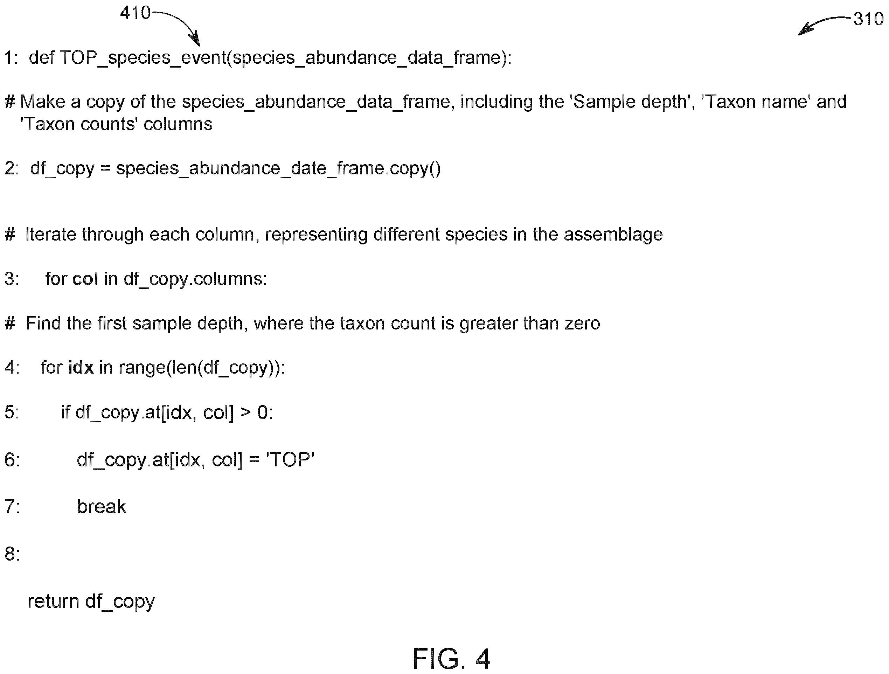

A corresponding generation function 310 is used for each of these events 328. For example, for the 'TOP' occurrence species biostratigraphic event, the generation function 310 illustrated in FIG. 4 is used. This generation function starts at line 1 in FIG. 4 by defining a frame 410 called TOP_species_event, which includes the sample depth 212, taxon name 211, and taxon counts 214 information as illustrated in FIG. 3A. In line 2, a table df_copy is defined and includes a copy of all the data from the frame 410. At line 3, a variable "col" is defined to loop through each column of the table df_copy. At line 4, a variable idx is defined to loop through each value of the plural values of a given column in the df_copy table. When a value in a row in the given column is found to be larger than zero in line 5, the generation function 310 replaces in line 6 that value with the event "TOP" in the table df_copy and stops the loop for that column in line 7. However, the loop for the next column of the table continues at line 8 until all the columns of the table have a single value TOP in one of their rows. Finally, the generation function 310 returns the table df_copy having each column including a single value TOP. Note that the value TOP replaces the number at the column, row position in the table.

In other words, the generation function 310 for the TOP occurrence processes the microfossil taxon abundance data by iterating through each column, representing different species in the assemblage. For each species, it scans the data from the top to the bottom. Upon encountering the first non-zero value (indicating the presence of the species), it marks that cell with the string 'TOP'. This identifies the first sample depth at which the species appears in the data (well). Similar generation functions are employed to generate the BASE, FCO, LCO, INC, DEC, and ACME species biostratigraphic events.

Next, the other generation functions 310 are similarly run on the table df_copy to generate the values shown in column 328 in FIG. 3B. The other generation functions 310 are modified, when compared to the function 310 illustrated in FIG. 4, based on the definitions of the events BASE, INC, DEC, ACME, FCO, and LCO noted above. The resulting table, after running all these generation functions 310 is then processed to extract only the events TOP, BASE, INC, DEC, ACME, FCO, and LCO, as shown in FIG. 3B. The table 320 shown in FIG. 3B is the result of both the sub-steps 106A and 106B.

After the execution of all the generation functions 310 for all the events TOP, BASE, INC, DEC, ACME, FCO, and LCO, the generated species biostratigraphic events 328 are correlated with (in-house) dictionaries to assign absolute ages 332 to each determined event (TOP, BASE, INC, DEC, ACME, FCO, LCO, as illustrated in FIG. 3B). Note that these dictionaries, which were generated by experts in the field, have the ages 332 already mapped to some or all the variables TOP, BASE, INC, DEC, ACME, FCO, and LCO, based on other methods (which are not discussed herein). Following the assignment of ages to the species biostratigraphic events, distinct versions of the chronostratigraphic interpretations can be made. Note that this embodiment runs generation functions 310 for each of the events TOP, BASE, INC, DEC, ACME, FCO, and LCO. However, in some embodiments it is possible to run only some of the generation functions 310, only for some of these events, and still to be able to assign ages based on the dictionaries. For example, it is possible to run generation functions only for events TOP, BASE, INC, and DEC, or only TOP, BASE, ACME, FCO, and LCO, or only TOP, BASE, FCO, and LCO, and so on. In one embodiment, it is possible to generate single events for each species, i.e., based only on the TOP, only BASE, only LCO, only FCO, only ACME, only DEC, or only INC functions. In another embodiment, it is possible to generate events based on combinations of these functions, for example, only TOP and BASE, only TOP and LCO, only TOP and FCO, only TOP and ACME, only TOP and DEC, or only TOP and INC. In biostratigraphy the events TOP and BASE are the most used.

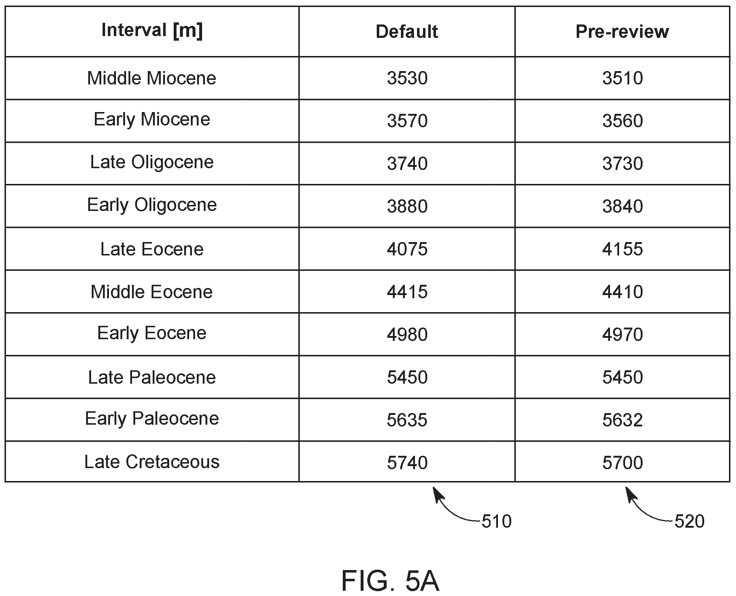

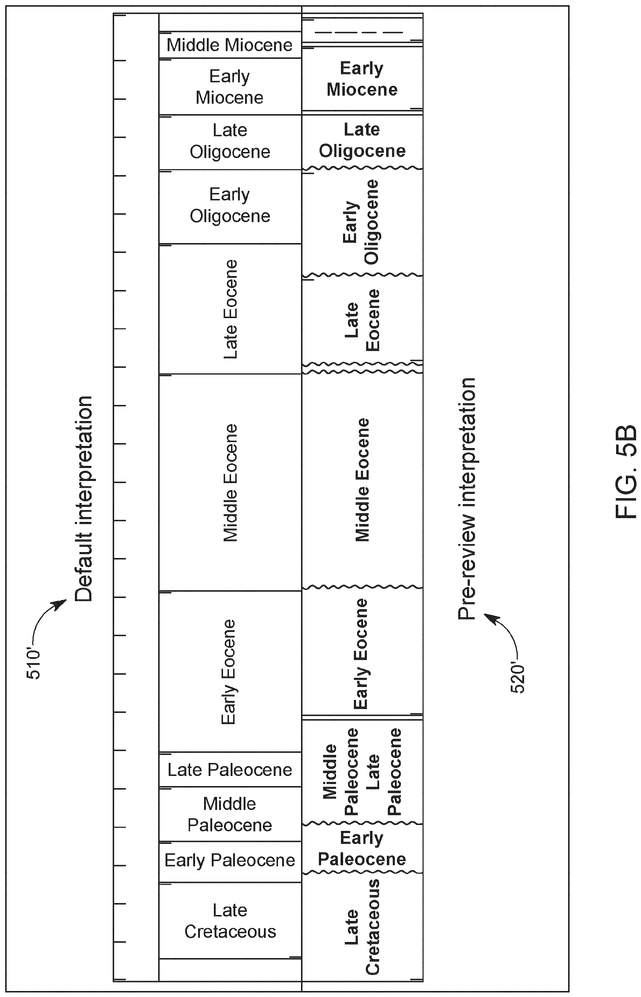

Returning to FIG. 1, the method 100 next advances to step 108 for outputting the chronostratigraphic charts (or maps) based on the generated biostratigraphic data 320. This step creates: (1) a default interpretation 510 and (2) a re-interpreted enriched biostratigraphic data to generate a pre-review interpretation 520, as illustrated in FIGs. 5A and 5B. The two distinct versions, default and pre-review, of the interpretations are plotted as chronostratigraphic charts 510' and 520' in FIG. 3B. The default interpretation version uses data extracted from the original reports, plotting only the original information on a 'default' chronostratigraphic chart.

The pre-review interpretation version (520, 520') represents the outcomes of the digital workflow illustrated in the method 100, which includes the interpretation version with all the data updates and enrichments.

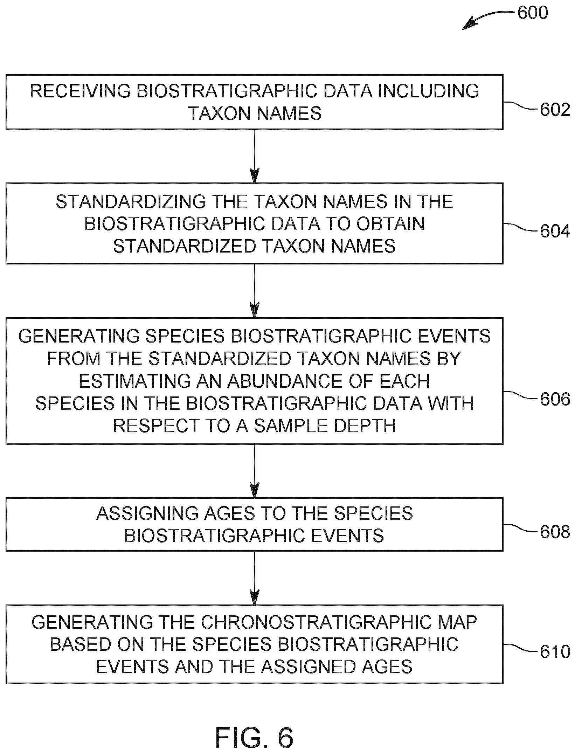

A method 600 for generating a chronostratigraphic chart 520' for a given subsurface is now discussed with regard to FIG. 6. The method 600 includes a step 602 of receiving biostratigraphic data 210 including taxon names 211, a step 604 of standardizing the taxon names 211 in the biostratigraphic data 210 to obtain standardized taxon names, a step 606 of generating species biostratigraphic events 328 from the standardized taxon names by estimating an abundance of each species in the biostratigraphic data 210 with respect to a sample depth, a step 608 of assigning ages 332 to the species biostratigraphic events 328, and a step 608 of generating the chronostratigraphic chart 520' based on the species biostratigraphic events 328 and the assigned ages 332.

The step of assigning may include using a dictionary to fit the ages to the species biostratigraphic events. The step of generating the species biostratigraphic events may include calculating one or more of a top occurrence, base occurrence, increase in abundance, decrease in abundance, maximum abundance, a first common occurrence, and a last common occurrence of microfossils in a well sample. The top occurrence marks a highest stratigraphic level at which a specific taxon is found in the well sample, the base occurrence marks a lowest stratigraphic level at which the specific taxon is found in the well sample, the increase in abundance is identified at a sample depth where a species abundance falls into an upper quartile, after calculating confidence levels of an associated normal distribution, the decrease in abundance is identified at a sample depth where the species abundance falls into a lower quartile after calculating the confidence levels of the associated normal distribution, the maximum abundance represents a highest abundance of the taxon at a stratigraphic level in the well sample, the first common occurrence is a first stratigraphic level where the species abundance first exceeds six specimens for foraminifera and palynomorphs, and twenty-five specimens for nannofossils, and the last common occurrence is a last observed stratigraphic level where the species abundance last exceeds six specimens for foraminifera and palynomorphs, and twenty-five specimens for nannofossils.

The step of standardizing may include updating taxon names based on fuzzy string matching and may also include determining cavings and reworked specimens using a supervised machine learning algorithm, and removing the cavings and reworked specimens from the biostratigraphic data prior to the step of generating the species biostratigraphic events. The biostratigraphic data includes sample depths, taxon names, and associated taxon counts.

The methods discussed herein may be applied to the field of subsurface exploration, for example, hydrocarbon exploration and development, geothermal exploration and development, and carbon capture and sequestration, or other natural resource exploration and exploitation.

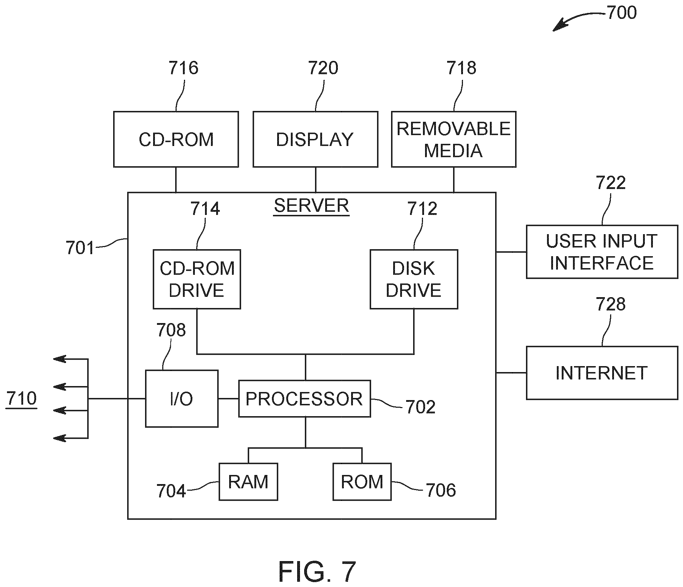

The above-discussed procedures and methods may be implemented in a computing device as illustrated in FIG. 7. Hardware, firmware, software or a combination thereof may be used to perform the various steps and operations described herein. The computing device 700 is suitable for performing the activities described in the above embodiments and may include a server 701. Such a server 701 may include a central processor (CPU) 702 coupled to a random access memory (RAM) 704 and to a read-only memory (ROM) 706. ROM 706 may also be other types of storage media to store programs, such as programmable ROM (PROM), erasable PROM (EPROM), etc. Processor 702 may communicate with other internal and external components through input/output (I/O) circuitry 708 and bussing 710 to provide control signals and the like. Processor 702 carries out a variety of functions as are known in the art, as dictated by software and/or firmware instructions.

Server 701 may also include one or more data storage devices, including hard drives 712, CD-ROM drives 714 and other hardware capable of reading and/or storing information, such as DVD, etc. In one embodiment, software for carrying out the above-discussed steps may be stored and distributed on a CD-ROM or DVD 716, a USB storage device 718 or other form of media capable of portably storing information. These storage media may be inserted into, and read by, devices such as CD-ROM drive 714, disk drive 712, etc. Server 701 may be coupled to a display 720, which may be any type of known display or presentation screen, such as LCD, plasma display, cathode ray tube (CRT), etc. A user input interface 722 is provided, including one or more user interface mechanisms such as a mouse, keyboard, microphone, touchpad, touch screen, voice-recognition system, etc.

Server 701 may be coupled to other devices, such as CT scan, MRI machine, or any other data imaging systems. The server may be part of a larger network configuration as in a global area network (GAN) such as the Internet 728, which allows ultimate connection to various landline and/or mobile computing devices.

As described above, the apparatus 700 may be embodied by a computing device. However, in some embodiments, the apparatus may be embodied as a chip or chip set. In other words, the apparatus may comprise one or more physical packages (e.g., chips) including materials, components and/or wires on a structural assembly (e.g., a baseboard). The structural assembly may provide physical strength, conservation of size, and/or limitation of electrical interaction for component circuitry included thereon. The apparatus may therefore, in some cases, be configured to implement an embodiment of the present invention on a single chip or as a single "system on a chip." As such, in some cases, a chip or chipset may constitute means for performing one or more operations for providing the functionalities described herein.

The processor 702 may be embodied in a number of different ways. For example, the processor may be embodied as one or more of various hardware processing means such as a coprocessor, a microprocessor, a controller, a digital signal processor (DSP), a processing element with or without an accompanying DSP, or various other processing circuitry including integrated circuits such as, for example, an ASIC (application specific integrated circuit), an FPGA (field programmable gate array), a microcontroller unit (MCU), a hardware accelerator, a special-purpose computer chip, or the like. As such, in some embodiments, the processor may include one or more processing cores configured to perform independently. A multi-core processor may enable multiprocessing within a single physical package. Additionally or alternatively, the processor may include one or more processors configured in tandem via the bus to enable independent execution of instructions, pipelining and/or multithreading.

In an example embodiment, the processor 702 may be configured to execute instructions stored in the memory device 704 or otherwise accessible to the processor. Alternatively or additionally, the processor may be configured to execute hard coded functionality. As such, whether configured by hardware or software methods, or by a combination thereof, the processor may represent an entity (e.g., physically embodied in circuitry) capable of performing operations according to an embodiment of the present invention while configured accordingly. Thus, for example, when the processor is embodied as an ASIC, FPGA or the like, the processor may be specifically configured hardware for conducting the operations described herein. Alternatively, as another example, when the processor is embodied as an executor of software instructions, the instructions may specifically configure the processor to perform the algorithms and/or operations described herein when the instructions are executed. However, in some cases, the processor may be a processor of a specific device (e.g., a pass-through display or a mobile terminal) configured to employ an embodiment of the present invention by further configuration of the processor by instructions for performing the algorithms and/or operations described herein. The processor may include, among other things, a clock, an arithmetic logic unit (ALU) and logic gates configured to support operation of the processor.

The term "about" is used in this application to mean a variation of up to 20% of the parameter characterized by this term.

It will be understood that, although the terms first, second, etc. may be used herein to describe various elements, these elements should not be limited by these terms. These terms are only used to distinguish one element from another. For example, a first object or step could be termed a second object or step, and, similarly, a second object or step could be termed a first object or step, without departing from the scope of the present disclosure. The first object or step, and the second object or step, are both, objects or steps, respectively, but they are not to be considered the same object or step.

The terminology used in the description herein is for the purpose of describing particular embodiments and is not intended to be limiting. As used in this description and the appended claims, the singular forms "a," "an" and "the" are intended to include the plural forms as well, unless the context clearly indicates otherwise. It will also be understood that the term "and/or" as used herein refers to and encompasses any possible combinations of one or more of the associated listed items. It will be further understood that the terms "includes," "including," "comprises" and/or "comprising," when used in this specification, specify the presence of stated features, integers, steps, operations, elements, and/or components, but do not preclude the presence or addition of one or more other features, integers, steps, operations, elements, components, and/or groups thereof. Further, as used herein, the term "if" may be construed to mean "when" or "upon" or "in response to determining" or "in response to detecting," depending on the context.

The disclosed embodiments provide a biostratigraphy interpretation system and method that has process legacy and/or new data for generating chronostratigraphic charts for a given subsurface. The embodiments discussed herein are intended to cover alternatives, modifications and equivalents, which are included in the spirit and scope of the invention as defined by the appended claims. Further, in the detailed description of the embodiments, numerous specific details are set forth in order to provide a comprehensive understanding of the claimed invention. However, one skilled in the art would understand that various embodiments may be practiced without such specific details.

Although the features and elements of the present embodiments are described in the embodiments in particular combinations, each feature or element can be used alone without the other features and elements of the embodiments or in various combinations with or without other features and elements disclosed herein.

This written description uses examples of the subject matter disclosed to enable any person skilled in the art to practice the same, including making and using any devices or systems and performing any incorporated methods. The patentable scope of the subject matter is defined by the claims, and may include other examples that occur to those skilled in the art. Such other examples are intended to be within the scope of the claims.

### References

The entire content of all the publications listed herein is incorporated by reference in this patent application.
[1] Schröder, S., 2006: Stratigraphic and geochemical framework of the Agouron drill cores, Transvaal Supergroup (Neoarchean-Paleoproterozoic, South Africa). South African Journal of Geology, vol. 109(1-2), p. 23-54.
[2] Brekke, H., Sjulstad, I.H., Magnus, Ch., Williams W.R., 2001: Sedimentary environments offshore Norway - an overview. Norwegian Petroleum Society Special Publications, vol. 10, p. 7-37.
[3] Sissingh, W., 1977: Biostratigraphy of Cretaceous calcareous nannoplankton. Geologie en Mijnbouw, vol. 56(1), p. 37-65.
[4] Agterberg, F.P., Gradstein, F.M., Cheng, Q., Liu, G., 2013: The RASC and CASC programs for ranking, scaling and correlation of biostratigraphic events. Computers & Geosciences, vol. 54, p. 279-292.
[5] Hsiang, A.Y., Brombacher, A., Rillo, M.C., Mleneck-Vautravers, M.J., Conn, S., Lordsmith, S., Jentzen, A., Henehan, M.J., Metcalfe, B., Fenton, I.S., Wade, B.S., Fox, L., Meilland, J., Davis, C.V., Baranowski, U., Groeneveld, J., Edgar, K.M., Movellan, A., Aze, T., Dowsett,. H.J., Miller, C.G., Rios, N., Hull, P.M., 2019: Endless Forams: >34,000 Modern Planktonic Foraminiferal Images for Taxonomic Training and Automated Species Recognition Using Convolutional Neural Networks. Paleoceanography and Paleoclimatology, vol. 34(7), p. 1157-1177.
[6] Garidel-Thoron, T., Marchant, R., Tetard, M., Adebayo, M., Gaily, Y., 2020: Automated recognition and picking of foraminifera using the MiSo (microfossil sorter) prototype. In: EGU General Assembly 2020, Vienna, Austria.
[7] Simmons, M., Bidgood, M., Adeyemi, T., Maksymiw, P., Osterloff, P., Possee, D., Prince, I., Routledge, C., Sauders, P., Van Buchem, F., 2019: The power of machine learning in petroleum geoscience: Biostratigraphy as an example. In: 81st EAGE Conference and Exhibition 2019, London, United Kingdom, p. 1-5.

## Claims

1. A method (600) for generating a chronostratigraphic chart (520') for a given subsurface, the method (600) comprising:
receiving (602) biostratigraphic data (210) including taxon names (211);
standardizing (604) the taxon names (211) in the biostratigraphic data (210) to obtain standardized taxon names;
generating (606) species biostratigraphic events (328) from the standardized taxon names by estimating an abundance of each species in the biostratigraphic data (210) with respect to a sample depth;
assigning (608) ages (332) to the species biostratigraphic events (328); and
generating (608) the chronostratigraphic chart (520') based on the species biostratigraphic events (328) and the assigned ages (332).

2. The method of Claim 1, wherein the step of assigning includes using a dictionary to fit the ages to the species biostratigraphic events and the biostratigraphic data includes sample depths, taxon names, and associated taxon counts.

3. The method of Claim 1, wherein the step of generating the species biostratigraphic events comprises:
calculating one or more of a top occurrence, base occurrence, increase in abundance, decrease in abundance, maximum abundance, a first common occurrence, and a last common occurrence of microfossils in a well sample.

4. The method of Claim 3, wherein the top occurrence marks a highest stratigraphic level at which a specific taxon is found in the well sample.

5. The method of Claim 4, wherein the base occurrence marks a lowest stratigraphic level at which the specific taxon is found in the well sample.

6. The method of Claim 5, wherein the increase in abundance is identified at a sample depth where a species abundance falls into an upper quartile, after calculating confidence levels of an associated normal distribution.

7. The method of Claim 6, wherein the decrease in abundance is identified at a sample depth where the species abundance falls into a lower quartile after calculating the confidence levels of the associated normal distribution.

8. The method of Claim 7, wherein the maximum abundance represents a highest abundance of the taxon at a stratigraphic level in the well sample.

9. The method of Claim 8, wherein the first common occurrence is a first stratigraphic level where the species abundance first exceeds six specimens for foraminifera and palynomorphs, and twenty-five specimens for nannofossils.

10. The method of Claim 9, wherein the last common occurrence is a last observed stratigraphic level where the species abundance last exceeds six specimens for foraminifera and palynomorphs, and twenty-five specimens for nannofossils.

11. The method of Claim 1, wherein the step of standardizing comprises:
updating taxon names based on fuzzy string matching;
determining cavings and reworked specimens using a supervised machine learning algorithm; and
removing the cavings and reworked specimens from the biostratigraphic data prior to the step of generating the species biostratigraphic events.

12. A computing system (700) for generating a chronostratigraphic chart (520') for a given subsurface, the computing system (700) comprising:
an interface (708) for receiving (602) biostratigraphic data (210) including taxon names (211); and
a processor (702) connected to the interface (708) and configured to,
standardize (604) the taxon names (211) in the biostratigraphic data (210) to obtain standardized taxon names;
generate (606) species biostratigraphic events (328) from the standardized taxon names by estimating an abundance of each species in the biostratigraphic data (210) with respect to a sample depth;
assign (608) ages (332) to the species biostratigraphic events (328); and
generate (608) the chronostratigraphic chart (520') based on the species biostratigraphic events (328) and the assigned ages (332).

13. The computing device of Claim 12, wherein the processor is further configured to:
use a dictionary to fit the ages to the species biostratigraphic events; and
calculate one or more of a top occurrence, base occurrence, increase in abundance, decrease in abundance, maximum abundance, a first common occurrence, and a last common occurrence of microfossils in a well sample.

14. The computing device of Claim 13, wherein
the top occurrence marks a highest stratigraphic level at which a specific taxon is found in the well sample;
the base occurrence marks a lowest stratigraphic level at which the specific taxon is found in the well sample;
the increase in abundance is identified at a sample depth where a species abundance falls into an upper quartile, after calculating confidence levels of an associated normal distribution;
the decrease in abundance is identified at a sample depth where the species abundance falls into a lower quartile after calculating the confidence levels of the associated normal distribution;
the maximum abundance represents a highest abundance of the taxon at a stratigraphic level in the well sample;
the first common occurrence is a first stratigraphic level where the species abundance first exceeds six specimens for foraminifera and palynomorphs, and twenty-five specimens for nannofossils; and
the last common occurrence is a last observed stratigraphic level where the species abundance last exceeds six specimens for foraminifera and palynomorphs, and twenty-five specimens for nannofossils.

15. The computing system of Claim 12, wherein the processor is further configured to:
update taxon names based on fuzzy string matching;
determine cavings and reworked specimens using a supervised machine learning algorithm; and
remove the cavings and reworked specimens from the biostratigraphic data prior to the step of generating the species biostratigraphic events.
